# EUROPEAN PATENT APPLICATION

(11) **EP 2 248 942 A1**
(43) Date of publication of application: **10.11.2010**
(21) Application number: 10250850.4
(22) Date of filing: 28.04.2010
(51) Int. Cl.: D21B 1/32, D21F 9/00

(54) **Paper making device of used paper recycling apparatus and used paper recycling apparatus**

(30) Priority: 02.05.2009 JP 2009112371
(71) Applicant: Seed Co., Ltd., Osaka-shi Osaka (JP)
(72) Inventor: Tamai, Shigeru, Osaka-shi, Osaka (JP); Koyama, Yuji, Osaka-shi, Osaka (JP)
(74) Representative: Mounteney, Simon James

(57) **Abstract**

In a used paper recycling apparatus of furniture size that can be installed not only in a big office, but also in a small shop or general household room, this is a paper making device for making and producing recycled paper that is hardly lowered in strength if re-used repeatedly. The running condition of the mesh belt (105) which runs while filtering and dewatering the pulp suspension (PS) is set in a range of maintaining the pulp fibers in the pulp suspension (PS) supplied on the mesh belt (105) in a non-directional and disorderly array state, and therefore the manufactured recycled paper (RP) is free from so-called "texture of paper, " and the paper quality is uniform in anisotropy not different in longitudinal and lateral directions, and is sufficiently high in strength.

## Description

### BACKGROUND OF THE INVENTION

### Field of the Invention

The present invention relates to a paper making device of used paper recycling apparatus and a used paper recycling apparatus, and more particularly to a paper making technology in a small used paper recycling apparatus of furniture size, installed at the site of origin of used paper, for recycling and processing into reusable paper at the site without discarding the generated used paper.

### Description of the Related Art

Used paper of various types occurs not only in government offices or private companies, but also in daily life or general household. Used paper is usually discarded, incinerated, or disposed as refuse.

On the other hand, in the global concern about effective use of limited resources on earth, various technologies have been developed to regenerate and recycle the used paper being disposed and discarded so far.

Such used paper recycling technologies are mostly installed and executed in the paper making industry, and the used paper recycling plant requires, like the ordinary paper making plant, a vast land, an immense investment, and a huge quantity of water and chemicals for the purpose of high speed and mass production and high quality of recycled paper.

For recycling of used paper, a tremendous manual labor is needed for collecting used paper, and used paper collection involves various problems, such as mixing of foreign matter by multiple garbage collectors, defective classification due to lack of knowledge about used paper recycling, and entry of harmful objects, and if used paper is collected, in order to regenerate by 100 percent as recycled paper, final checking by specialists and cleaning works are needed. On the other hand, confidential documents are not easily recycled and are mostly incinerated, and the recycling rate is low.

To solve these problems of used paper recycling, an effective method is the development of a technology capable of recycling at the site of origin of used paper, and from such point of view, a new system is proposed by the present applicant, for example, in Japanese Patent Application Laid-Open No. 2008-174877 as a used paper recycling apparatus.

This used paper recycling apparatus is a realization of used paper recycling technology of large scale such as used paper recycling plant in a small size that can be installed in a small shop or a room in general household, and includes, in an apparatus case of furniture size, a pulp making unit for macerating and beating used paper to manufacture used paper pulp, a paper making unit for making recycled paper from the used paper pulp manufactured in this pulp making unit, and a control unit for driving and controlling the pulp making unit and the paper making unit in cooperation, in which the pulp making unit is composed of a macerating unit for agitating, crushing and macerating the used paper, and a beating unit for beating the used paper macerated in this macerating unit.

Herein, the used paper is agitated, macerated and beaten by the macerating unit of the pulp making unit, and made into pulp, and is further beaten and pulverized by the beating unit, and desired used paper pulp is obtained, and then this used paper pulp is processed in the paper making unit, that is, filtered and dewatered, squeezed and dewatered, and heated and dried, and recycled paper obtained. In this process, in the state of pulp, the used paper is decomposed into fiber level, and the printed characters and diagrams are completely decomposed and lost, and cannot be restored, so that leak or disclosure of confidential information or personal information composed in printed characters and diagrams can be securely prevented.

### SUMMARY OF THE INVENTION

It is a primary object of the present invention to present a novel paper making device of a used paper recycling apparatus improved further from the paper making unit of a conventional used paper recycling apparatus.

It is other object of the present invention to present a paper making device for manufacturing recycled paper less lowered in strength if used repeatedly in a used paper recycling apparatus of furniture size to be installed not only in a large office, but also in a small shop or a room in general household, by further improving the paper making technology of the paper making unit in the used paper recycling apparatus.

To achieve these objects, the paper making device of the used paper recycling apparatus of the present invention is a paper making device for manufacturing recycled paper from the used paper pulp manufactured in the pulp making unit of a preceding process, in the used paper recycling apparatus of furniture size to be installed at the site of origin of the used paper, including a paper making process unit for making wet paper by making from the slurry-type pulp suspension mixed of used paper pulp and water sent from the pulp making unit, in which this paper making process unit has a paper making conveyor for manufacturing and conveying the pulp suspension, and this paper making conveyor is disposed and configured to drive a mesh belt of paper making mesh structure composed of numerous mesh cells while filtering and dewatering the pulp suspension, and the paper quality control condition of the mesh belt is set in a range of maintaining the pulp fibers in the pulp suspension supplied on the mesh belt in a non-directional and disorderly array state.

Preferred embodiments include the following.
(1) The paper quality control condition of the mesh belt at least includes the running speed of the mesh belt and the running inclination angle of the mesh belt.
(2) The running speed of the mesh belt is set at 0.1 m/min to 1.8 m/min.
(3) The mesh belt is disposed and configured so as to run obliquely upward and straightly toward its running direction.
(4) The upward inclination angle of the mesh belt is set at 3 degrees to 12 degrees.
(5) The paper making process unit is provided at a starting end position of the paper making process of the paper making conveyor, and includes a pulp supply unit for supplying the pulp suspension sent from the pulp making device into the paper making conveyor, and by this pulp supply unit, the pulp suspension is spread uniformly and supplied on the upper side of the mesh belt of the paper making conveyor.
(6) The paper making mesh structure of the mesh belt is composed so that the pulp suspension supplied on the mesh belt may be filtered and dewatered to be wet paper of an appropriate weight in the process of the mesh belt running for a specified running distance.
(7) The mesh size of the mesh belt is 25 mesh cells to 80 mesh cells.
(8) The paper making process length of the mesh belt is set in a range of a straight running direction length of the mesh belt in the apparatus case of furniture size.
(9) The paper making process length of the mesh belt is set in relation to the running speed of the mesh belt and the paper making mesh structure, so that the pulp suspension may be manufactured into an appropriate weight, and that the paper making conveyor having the mesh belt may be contained within the apparatus case of furniture size.
(10) Including the paper making process unit for obtaining wet paper by manufacturing from slurry-like pulp suspension composed of water and used paper pulp sent from the pulp making device, a drying process unit for obtaining recycled paper by drying the wet paper manufactured and formed in this paper making process unit, and a dewatering roll unit for squeezing and dewatering the wet paper at a linkage part of the paper making process unit and the drying process unit, the pulp suspension supplied from the pulp making device is manufactured, dewatered, and dried.
(11) The paper making conveyor includes the mesh belt as an endless belt for manufacturing and conveying the pulp suspension, and a drive motor for driving and moving the mesh belt.

The used paper recycling apparatus of the present invention includes, in an apparatus case of furniture size, a pulp making unit for manufacturing used paper pulp by macerating and beating used paper, a paper making process unit for manufacturing recycled paper by making from the used paper pulp manufactured in this pulp making unit, and a control unit for driving and controlling the pulp making unit and the paper making process unit in cooperation, in which the paper making process unit is composed of the paper making device described above.

The paper making device of the present invention is produced as a result of various tests and studies by the present inventor on the basis of the used paper recycling technology conventionally operated in a large-scale factor such as used paper recycling plant, realized as the used paper recycling technology of furniture size of the present invention.

That is, the present inventor previously realized the used paper recycling technology in a large-scale factory facility in the used paper recycling technology in an extremely compact process working space of furniture size, and further continued studies and experiments to improve the technology, and has found out that the used paper recycled paper as the final product has its special property, that is, the used paper processed at a specific location of installation of the used paper recycling apparatus tends to be processed and used repeatedly, along with the purpose of prevention of leak or disclosure of confidential information, personal information, and various forms of information.

On the other hand, the present inventor also noticed that the recycled paper recycled in the used paper recycling apparatus of furniture size of the present invention also has the paper quality tending to withstand relatively this repeated regeneration, and repeated various studies and experiments in order to find out the cause, and finally discovered that the recycled paper does not show evidently the typical aspect of ordinary paper known as "texture of paper".

As a result of trials and errors by the present inventor, the present invention has been completed.

Hence, according to the paper making device of the present invention, the paper making process for manufacturing wet paper from the slurry-like pulp suspension mixed with water and used paper pulp sent from the pulp making device of the preceding process includes a paper making conveyor for manufacturing and conveying the pulp suspension, and this paper making conveyor is disposed and configured to run the mesh belt of paper making mesh structure composed of numerous mesh cells while filtering and dewatering the pulp suspension, and the paper quality condition of the mesh belt is set in a range of holding the pulp fibers in the pulp suspension supplied on the mesh belt in a non-directional and disorderly array state, and therefore the produced recycled paper is free from so-called "texture of paper", and the paper quality is uniform without difference in longitudinal and lateral direction, and is sufficiently usable in strength.

Therefore, along with the purpose of prevention of leak or disclosure of confidential information, personal information, and various forms of information, in the used paper recycled and processed repeatedly, the strength is not lowered, and the recycled paper withstanding use for a long period can be presented.

Accordingly, the invention realizes and presents a used paper recycling apparatus of furniture size that can be installed not only in a large office, but also in a small shop or a general household, being friendly to the environment, low in running cost, capable of preventing leak or disclosure of confidential information, personal information, and various types of information, and capable of maintaining a high confidentiality.

These and other objects and features of the present invention will be appreciated by reading the detailed description made in conj unction with the accompanying drawings, and novel facts pointed out in the claims thereof.

### BRIEF DESCRIPTION OF THE DRAWINGS

Fig. 1 is a front sectional view of an overall outline configuration of a used paper recycling apparatus in a preferred embodiment of the present invention.

Fig. 2 is a side sectional view of an overall outline configuration of the same used paper recycling apparatus.

Fig. 3 is a circuit diagram of configuration of a used paper circulation route of a beating unit of the used paper recycling apparatus.

Fig. 4 is a block diagram of configuration of a pulp concentration adjustment unit of the used paper recycling apparatus.

Fig. 5 is a perspective view of outline configuration of a paper making unit of the used paper recycling apparatus.

Fig. 6 is a perspective magnified view of configuration of a pulp suspension supply location of a paper making process unit in the paper making device.

Fig. 7 is a perspective view of outline configuration of the used paper recycling apparatus.

Fig. 8 is a front view explaining the paper quality of the recycled paper recycled in the used paper recycling apparatus.

Fig. 9 is a front view explaining the paper quality of ordinary paper generally available on market.

### DETAILED DESCRIPTION OF THE PREFERRED EMBODIMENT

A preferred embodiment of the present invention is specifically described below while referring to the accompanying drawings. Throughout the drawings, same reference numerals refer to same components or elements.

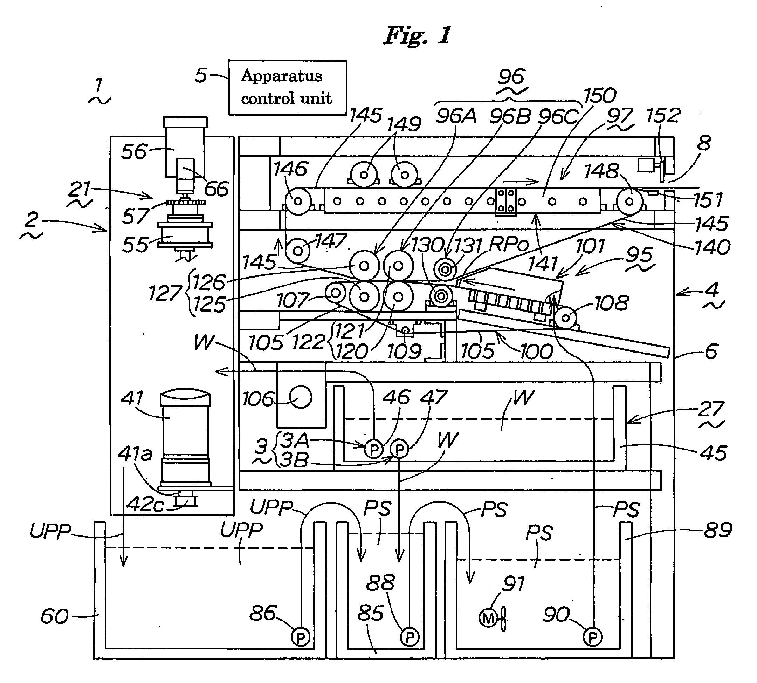

The used paper recycling apparatus of the present invention is shown in Fig. 1 to Fig. 7, and this used paper recycling apparatus 1 is specifically installed at the site of origin of used paper, and it is an apparatus for recycling into a re-usable paper at the site without discarding the generated used paper UP, and the used paper UP includes confidential documents of government offices or private companies, personal letters and others in the general household, and other used and unnecessary documents.

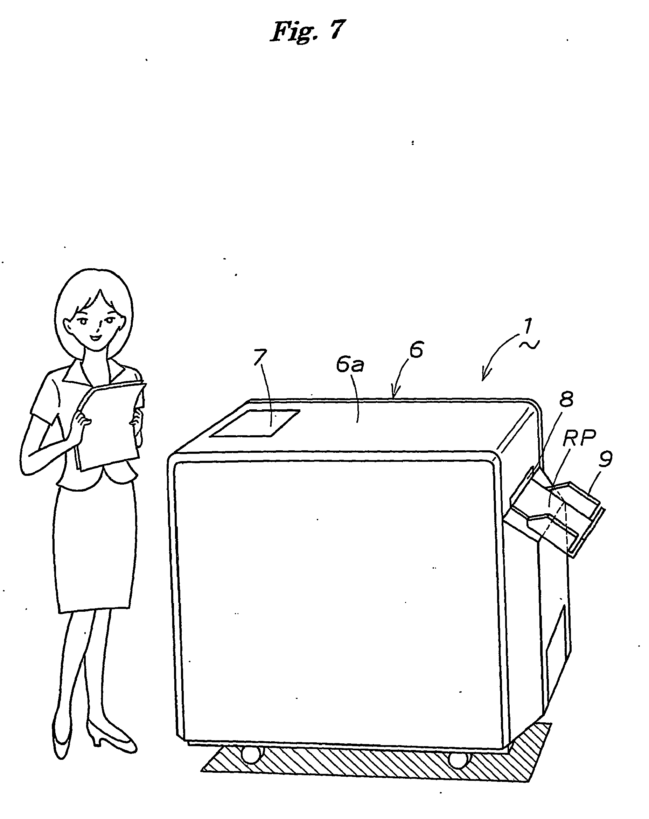

The used paper recycling apparatus 1 is a furniture size as shown in Fig. 7, that is, small in size and shape similar to furniture, such as document rack, locker, office desk, copier or personal computer used in an office, and mainly includes, as shown in Fig. 1, a pulp making unit (pulp making device) 2, a pulp concentration adjustment unit 3, a paper making unit (paper making device) 4, and an apparatus control unit (control unit) 5.

These apparatus units 2 to 5 are built in a compact design to be installed in an apparatus case 6. The apparatus case 6 is a furniture size as mentioned above, and specific dimensions and shapes may be designed appropriately depending on the purpose or application. The apparatus case 6 in the shown preferred embodiment is a rectangular box having dimensions and shapes similar to a copier installed and used in a general office, and the top plate of the apparatus case 6 has an inlet 7 which is opened and closed for supplying used paper UP, and an outlet 8 is provided at the side for discharging recycled paper RP, RP, .... At the lower edge portion of this outlet 8, a recycled paper receiving tray 9 is detachably provided for receiving recycled paper RP, RP, ... discharged from the outlet 8.

The pulp making unit 2 is a process for manufacturing used paper pulp by macerating and beating the used paper UP, and is composed of a macerating unit 20 for agitating, crushing and macerating the used paper UP, and a beating unit 21 for beating the used paper UP macerated in the macerating unit 20.

The macerating unit 20 is a process for agitating, crushing and macerating the used paper UP, and is mainly composed of a macerating tank 25, an agitating device 26, and a water feed device 27.

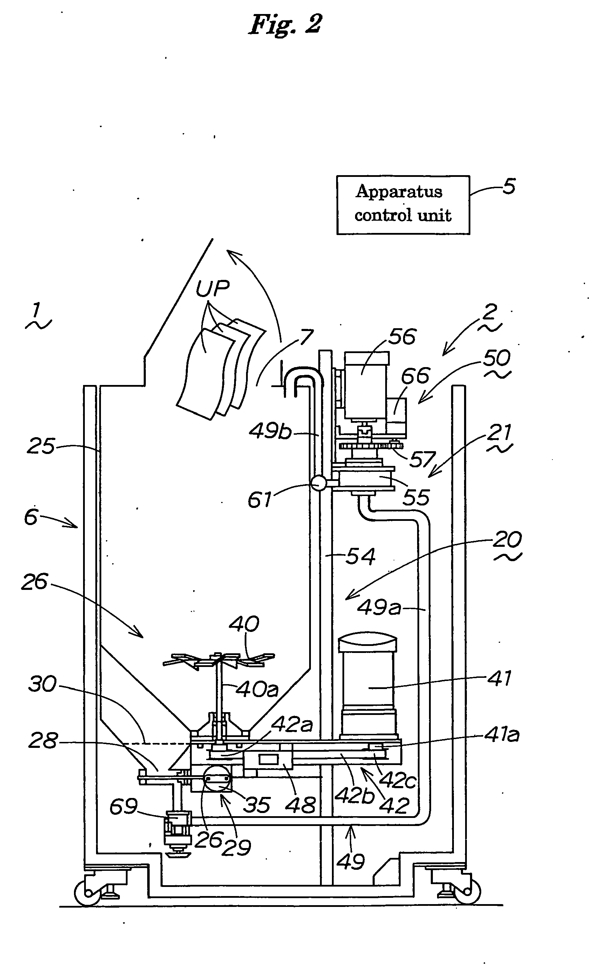

The macerating tank 25 has the inlet 7 formed in its ceiling wall as shown in Fig. 2 for charging and supplying the used paper UP, and a discharge port 28 is provided in its bottom wall for discharging the macerated used paper pulp UPP to the downstream side. The inner volume of the macerating tank 25 is determined depending on the number of sheets of used paper UP to be processed in batch. In the illustrated preferred embodiment, the macerating tank 25 has a capacity of agitating and treating (in batch) a total of about 500 sheets (about 2000 g) of used paper UP of A4 format PPC (plain paper copier) by adding about 98 liters of water. In this case, the concentration of the used paper pulp UPP to be macerated is about 2%. The concentration is adjusted by supplying water from the water feed device 27, and this water feed device 27 is a part of the pulp concentration unit 3 described below.

The inlet 7 has a structure to be opened and closed to the outside of a case cover 6a of the apparatus case 6, the discharge port 28 is opened and closed by an opening and closing valve 29, and communicates with a used paper pulp circulation route 49 described below. At the location of the discharge port 28, a debris filter 30 is provided for removing obstacles for the next beating process, such as clips, staples, pins and others used for binding the used paper UP, UP, ....

The opening and closing valve 29 opens and closes specifically by the crank motion of a crank mechanism 36 driven by a drive motor 35. The drive motor 35 is specifically an electric motor, and this drive motor 35 is electrically connected to the apparatus control unit 5.

The agitating device 26 is provided inside of the macerating tank 25, and includes an agitation impeller 40 and a drive motor 41.

The agitation impeller 40 has its rotation shaft 40a supported rotatably in an upright position in the central position of the bottom of the maceration tank 25, and is rotatable in the horizontal direction, and the lower end of the rotation shaft 40a is driven and coupled to a rotation shaft 41a of the drive motor 41 by way of transmission means 42 composed of a transmission pulley 42a, a transmission belt 42b, and a transmission pulley 42c.

The water feed device 27 is to supply water into the macerating tank 25, and forms a beating concentration adjustment unit 3A of the pulp concentration adjustment unit 3 as described below.

The water feed device 27 in the illustrated preferred embodiment includes, as shown in Fig. 1, a white water collection tank 45, a water feed pump 46 for beating concentration adjustment, and a water feed tank 47 for paper making concentration adjustment. The white water collection tank 45 is, as described below, designed to collect white water W (pulp water of very low concentration filtered through a paper making mesh in the paper making process) filtered and dewatered in the paper making unit 4, and the white water W collected in the white water collection tank 45 is first supplied into the macerating tank 25 from the water feed pump 46, and then into a concentration adjustment tank 85 described below from the water feed pump 47.

In this relation, in the bottom of the macerating tank 25, a weight sensor 48 is provided, and the used paper UP, UP, ... and the water to be processed in batch in the macerating tank 25 are weighed and controlled, and the weight sensor 48 is electrically connected to the apparatus control unit 5.

The weight sensor 48 of the illustrated preferred embodiment is a load cell, and is designed to sense and measure the total weight of weight of used paper UP, UP, ... and water charged and supplied in the macerating tank 25.

In a specific control constitution of the macerating unit 20, in the first place, when the inlet 7 is opened by the operator, and the used paper UP, UP, ... are charged into the macerating tank 25, the weight is sensed and measured by the weight sensor 48, and when reaching a specified weight (number of sheets), the operator is informed of it by sound and/or display. According to the display, when the operator closes the inlet 7, the water feed device 27 is driven, and the water W in the white water collection tank 45 is supplied by the water feed pump 46 into the macerating tank 25 by the portion corresponding to the charged weight of used paper UP, UP, ... (the number of sheets).

When the operator closes the outlet 7 after charging an arbitrary amount of used paper UP, UP, ... into the macerating tank 25 from the inlet 7 (an amount smaller than the specified weight (number of sheets)), the weight is sensed and measured by the weight sensor 48, and the water feed device 27 is driven, and the water W corresponding to the measured weight is supplied by the water feed pump 46 into the macerating tank 25 from the white water collection tank 45.

In the illustrated preferred embodiment, as mentioned above, when PPC used paper UP of A4 format is supplied into the macerating tank 25 by about s maximum capacity, about 500 sheets (about 2000 g), at this moment, it is noticed to the operator by sound and/or display, and by the closing operation of the inlet 7, about 98 liters of water is supplied from the water feed device 27, or when an arbitrary amount of used paper UP, UP, ... is supplied (an amount smaller than the specified weight (number of sheets)), the water corresponding to the supplied amount of used paper is added to the water feed device 27, and the concentration of the used paper pulp UPP to be macerated is controlled and adjusted to about 2%.

Thus, in the agitating device 26, the used paper UP, UP, ... charged into the macerating tank 25 from the charging opening of the apparatus case 6, that is, the inlet 7 are agitated and mixed for a specified time (10 to 20 minutes in the illustrated preferred embodiment) in the water supplied from the water feed device 27 by normal and reverse rotation of the agitation impeller 40 by the drive motor 41, and thereby the used paper UP, UP, ... are macerated and beaten into used paper pulp UPP.

The discharge port 28 of the macerating tank 25 is closed by the opening and closing valve 29 during operation of the macerating unit 20, and flow of used paper UP or used paper pulp UPP from the macerating tank 25 into the used paper pulp circulation route 49 is blocked, while the inlet 7 is opened by the opening and closing valve 29 during operation of the beating unit 21 described later, and the flowing and circulating loop of the used paper pulp UPP from the macerating tank 25 into the used paper pulp circulation route 49 is allowed.

The beating unit 21 is a process for beating the used paper UP macerated in the macerating unit 20, and is specifically designed to pressurize and beat the used paper UP macerated in the macerating unit 20, and to grind and pulverize (into micro-fibers) the inks forming characters and patterns on the used paper UP (printing inks forming characters and patterns on the used paper UP by various printing technologies, or inks forming characters and patterns on the used paper UP by pencil, ball-point pen, fountain pen, and other writing tools).

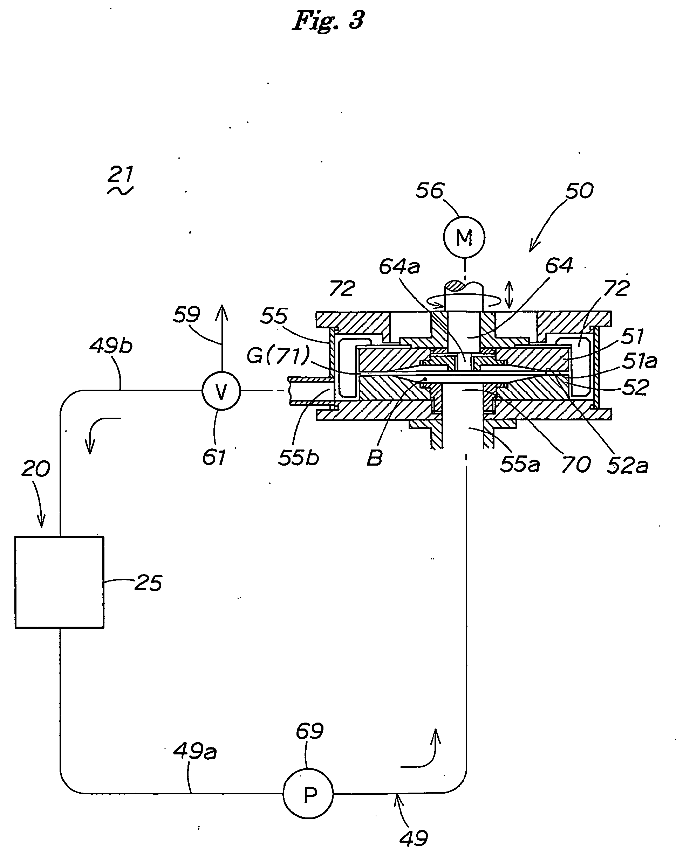

This beating unit 21 mainly includes a grinder 50. This grinder 50 includes, as shown in Fig. 3, a pair of beating disks 51, 52 rotated and driven relatively, and the pair of beating disks 51, 52 have beating action surfaces 51a, 52a disposed oppositely and concentrically across a tiny beating gap G.

The beating gap G of the beating action surfaces 51a, 52a of the grinder 50 is determined so as to be narrowed gradually, as described below, from the grinder 50 in an initial period of beating process to the grinder 50 in a later period.

In the beating unit 21 of the present preferred embodiment, as shown in Fig. 3, the used paper pulp circulation route 49 having the grinder 50 is formed, and the used paper pulp UP is circulated and beaten for a specified time by way of the grinder 50 in a circulation system.

By execution of the beating process in the used paper pulp circulation route 49, in spite of the small and narrow process space in the apparatus case 6 of furniture size, a used paper pulp beating process route of basically infinite length not limited in length is formed, and the beating process space equally compared with the beating process of a large-scale apparatus is realized, and an optimum beating effect is obtained depending on the purpose.

Moreover, one grinder 50 carries out the whole beating process throughout the entire process of the beating process, and this one grinder 50 has the functions of a plurality of grinders from the grinder in an initial period of beating process to the grinder in a later period. More specifically, the beating gap G of the beating action surfaces 51a, 52a of the grinder 50 is controlled and adjusted so as to be narrower gradually from the initial period to the final period of the beating process.

The grinder 50 of the illustrated preferred embodiment is disposed, as shown in Fig. 2, adjacently to the macerating tank 25 of the macerating unit 20, on an apparatus machine body 54 composing the apparatus case 6, and as shown in Fig. 3, it further includes a beating tank 55 communicating with the macerating tank 25 of the macerating unit 20, the pair of beating disks 51, 52 provided relatively and rotatably in this beating tank 55, a rotation drive source 56 for relatively rotating the pair of beating disks 51, 52, and gap adjusting means 57 for adjusting the beating gap G of the pair of beating disks 51, 52.

The beating tank 55 is formed in a closed cylindrical shape for accommodating the pair of beating disks 51, 52, and has a supply port 55a for supplying the used paper pulp UPP from the upstream side, and a discharge port 55b for discharging the beaten used paper pulp UPP to the downstream side.

More specifically, the supply port 55a is opened in the center of the bottom of the beating tank 55 toward the vertical direction, and the discharge port 55b is opened at the cylindrical side of the beating tank 55 toward the horizontal direction. The supply port 55a and the discharge port 55b are connected to communicate with the macerating tank 25 of the macerating unit 20, respectively by way of circulation pipings 49a, 49b as shown in Fig. 3, and the discharge port 55b is further connected to communicate with a used paper pulp collection tank 60 by way of a discharge piping 59.

Reference numeral 61 shows a direction changeover valve, by the changeover operation of this direction changeover valve 61, the used paper pulp UPP discharged from the discharge port 55b is selectively returned to the macerating tank 25, or collected in the used paper pulp collection tank 60. The direction changeover valve 61 is specifically an electromagnetic opening and closing valve, and is electrically connected to the apparatus control unit 5.

Of the pair of beating disks 51, 52, one is a fixed side beating disk fixed in the rotating direction, and other is a rotating side beating disk which is rotatable. In the illustrated preferred embodiment, the upper side beating disk 51 is the rotating side, and the lower side beating disk 52 is the fixed side, and the rotating side beating disk 51 of the upper side is disposed oppositely to the fixed side beating disk 52 of the lower side, concentrically and rotatably across a tiny beating gap G. The rotating side beating disk 51 is driven and coupled to a drive motor 56 by way of a rotation main shaft 64 pivoted rotatably to the fixed side of the apparatus machine body 54 and movably in the axial direction.

Although not shown specifically, the rotation main shaft 64 is rotatably pivoted on an elevating member of the gap adjusting means 57, and the rotating side beating disk 51 is concentrically and integrally attached at its leading end, and its base end part is driven and coupled integrally in the rotating direction and relatively movably in the axial direction on the rotation shaft of the drive motor 56.

The drive motor 56 is a rotation drive source, and relatively rotates the pair of beating disks 51, 52, and specifically an electric motor is used, and the drive motor 56 as its drive source is electrically connected to the apparatus control unit 5.

The opposite sides 51a, 52a of the both beating disks 51, 52 forming the tiny beating gap G mutually collaborate to form beating action surfaces. These opposite beating action surfaces 51a, 52a are formed as wheel surfaces having a multiplicity of abrasive grains bonded by a bonding agent. The both beating action surfaces 51a, 52a are, as shown in Fig. 3, formed in a taper shape continuously increased in the diameter size in the mutually opposite directions, and are formed as annular flat surfaces parallel to each other at the outermost peripheral edges, and these annular flat surfaces form the beating gap G.

In other words, in the pair of beating disks 51, 52, in the central position of the beating action surface 42a of the fixed side beating disk 52, an inlet 70 is formed to communicate coaxially with the supply port 55a of the beating tank, and the two annular flat surfaces formed on the outer peripheral edges of the beating action surfaces 51a, 52a of the pair of beating disks 51, 52 form an outlet 71 communicating with the discharge port 55b of the beating tank 55 and having the beating gap G.

On the outer circumference of the rotating side beating disk 51, a plurality of blades 72, 72, ... are formed at specified intervals in the circumferential direction, and these blades 72, 72, ... push out the used paper pulp UPP discharged from the outlet 71 in pumping action toward the discharge port 55b of the beating tank 55 by centrifugal force by rotation of the rotating side beating disk 51.

By the drive motor 56 as the drive source, when the rotating side beating disk 51 is rotated and driven to the fixed side beating disk 52, the used paper pulp UPP supplied into a beating gap B by way of the supply port 55a of the beating tank 55 and the inlet 70 from the macerating tank 25 of the macerating unit 20 flows into the beating space B from the inlet 70, and passes through this beating space B, and is pressurized and beaten by the relatively rotating beating action surfaces 51a, 52a, and the inks forming the characters and patterns on the used paper UP are ground and pulverized, and then it is discharged by way of the discharge port 55b of the beating tank 55 from the outlet 71.

At the time of discharge from this outlet 71, the used paper pulp UPP is further pressurized and beaten at the location of the outlet 71 having the beating gap G, and is pulverized to a specified micron size (to become micro-fiber) defined by this beating gap G.

In this regard, in the present preferred embodiment, as mentioned above, in the circulation system beating process disposing only one grinder 50 in the used paper pulp circulation route 49 (see Fig. 3), and this one grinder 50 has the functions of a plurality of grinders from the grinder in an initial period of beating process to the grinder in a terminal period, and more specifically, the beating gap G of the grinder 50 is controlled and adjusted by the gap adjusting means 57 so as to be narrower gradually from the initial period to the final period of the beating process.

The gap adjusting means 57 is not particularly illustrated, but is designed to move the pair of beating disks 51, 52 relatively in the rotation axial direction, to control and adjust the beating gap G of these beating disks 51, 52, and is mainly composed of moving means (not shown) for moving the rotating side beating disk 51 in the rotation axial direction, that is, in the axial direction of a rotation main shaft 64, and a drive source 66 for driving this moving means. The drive source is specifically an electric motor, and this drive motor 66 is electrically connected to the apparatus control unit 5.

By the rotation of this electric motor 66, the rotating main shaft 64 is moved up and down by way of the moving means, and therefore the rotating side beating disk 51 formed integrally with the rotation main shaft 64 is moved in the vertical direction to the fixed side beating disk 52, that is, in the rotation axial direction, and the beating gap G between the two beating disks 51, 52 is controlled and adjusted.

For this purpose, a position detection sensor (not shown) is provided for detecting the ascending and descending position of the rotating side beating disk 51, and depending on the result of detection by this position detection sensor, the drive motor 66 is driven and controlled. The position detection sensor is electrically connected to the apparatus control unit 5.

The beating gap G of the beating disks 51, 52 is controlled and adjusted by the gap adjusting means 57 in the circulation system beating process by the used paper pulp circulation route 49 shown in Fig. 3, in mutual interaction with a circulation pump 69 which is circulating means.

That is, in Fig. 3, the used paper pulp UPP macerated by the macerating unit 20 is circulated through the used paper pulp circulation route 49 by the circulation pump 69, and is beaten by the grinder 50, and at this time the beating gap G of the beating action surfaces 51a, 52a of the grinder 50 is controlled by the gap adjusting means 57 so as to be narrower gradually from the initial period to the terminal period of the beating process.

In the used paper pulp circulation route 49, the macerating tank 25 of the macerating unit 20 is included, and in this beating process, the agitating device 26 of the macerating unit 20 is driven and controlled, and the macerating unit 20 is driven simultaneously with the beating unit 21. That is, in the circulation system beating process, the used paper pulp UPP flows out into the used paper pulp circulation route 49 from the macerating tank 25, while the used paper pulp UPP beaten by the grinder 50 flows into the macerating tank 25, and therefore in the macerating tank 25, the used paper pulp UPP of different degrees of beating is mixed, and by the agitating action by the agitating device 26, the degree of beating of the used paper pulp UPP in the macerating tank 25 is made uniform, and the beating process is promoted.

The used paper pulp collection tank 60 is a location for collecting the used paper pulp UPP beaten and pulverized to a desired size by the beating unit 21, and the used paper pulp UPP collected herein is mixed and adjusted to a paper making concentration corresponding to the finished paper quality of the recycled paper RP to be recycled as a pulp suspension PS, and is sent to the paper making unit 4 in a next paper making process.

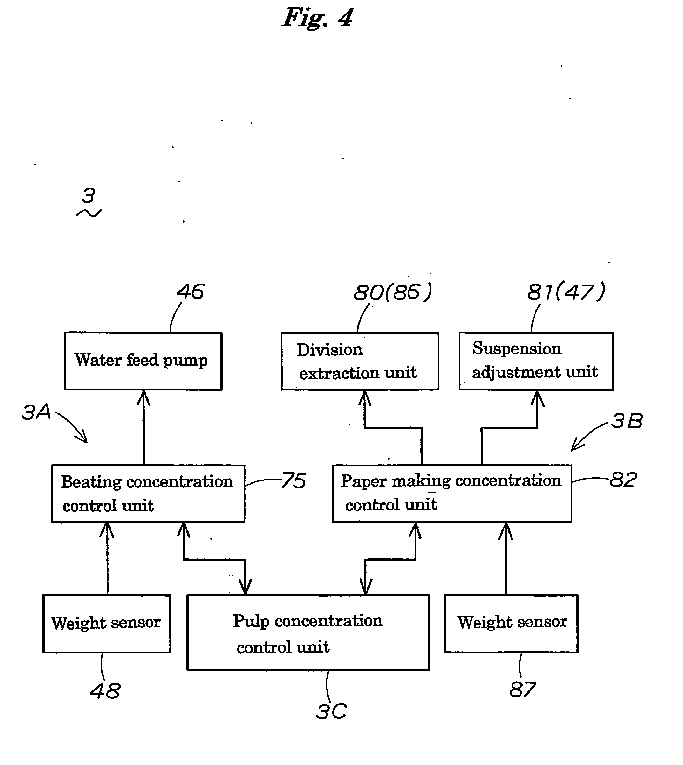

The pulp concentration adjusting unit 3 is weight type device for adjusting the concentration of the used paper pulp UPP supplied in the paper making unit 4, by measuring the weight and adjusting the mixing rate of used paper UP and water W supplied into the apparatus, and more specifically as shown in Fig. 4, it includes a beating concentration adjusting unit 3A, a paper making concentration adjusting unit 3B, and a pulp concentration control unit 3C.

The beating concentration adjusting unit 3A is to adjust the beating concentration of the used paper pulp UPP in the pulp making unit 2, corresponding to the beating efficiency by the beating unit 21, and as mentioned above, it is mainly composed of the water feed pump 46 and the beating concentration control unit 75 for adjusting the beating concentration of the water feed device 27.

The supply amount of white water W by the water feed pump 46 of the beating concentration adjusting unit 3A is preferred to be set so that the beating concentration of the used paper pulp UPP macerated and beaten by the agitating device 26 may be, for example, the maximum concentration allowable for the beating capacity of the grinder 50 of the beating unit 21 for executing the next step of the beating process, and in the illustrated preferred embodiment, it is set to be a beating concentration of about 2% as mentioned above.

The beating concentration control unit 75 drives and controls the water feed pump 46 so as to supply a necessary amount of water into the macerating tank 25, as mentioned above, depending on the result of measurement from the weight sensor 48. This beating concentration control unit 75 composes a part of the apparatus control unit 5 as described below.

The paper making concentration adjusting unit 3B is to adjust the paper making concentration of the used paper pulp UPP in the paper making unit 4, to an appropriate concentration corresponding to the finished paper quality of the recycled paper RP to be recycled, and is more specifically designed to adjust the concentration of the used paper pulp UPP manufactured in the pulp making unit 2 by a division system, and it mainly includes a division extraction unit 80, a suspension preparing unit 81, and a paper making concentration control unit 82.

The division extraction unit 80 is to divide and extract by a specified small portion from the total volume of the used paper pulp UPP manufactured in the pulp making unit 2 in the preceding process, and includes a used paper pulp supply pump 86 for division and extraction for extracting the used paper pulp UPP of the used paper pulp collection tank 60 and sending to a concentration adjusting tank 85.

The suspension preparing unit 81 is to prepare a pulp suspension PS of a specified concentration by adding a prescribed amount of water W for concentration adjustment to the specified small portion of the used paper pulp UPP divided and extracted by the division extraction unit 80, and mainly includes a water feed pump 47 of the water feed device 27.

Although not shown specifically, in the bottom of the concentration adjusting tank 85, same as in the case of the macerating tank 25 mentioned above, a weight sensor 87 composed of a load cell is provided, and is designed to measure and control the amount of the used paper pulp UPP and water W for concentration adjustment supplied into the concentration adjusting tank 85, and the weight sensor 87 is electrically connected to the apparatus control unit 5.

The paper making concentration control unit 82 controls by interacting the division extraction unit 80 and the suspension preparing unit 81, and forms a part of the apparatus control unit 5, and controls the pumps 86, 47 of the division extraction unit 80 and the suspension preparing unit 81 by interaction so as to execute the following step of the paper making concentration adjusting process.

First of all, from the whole volume of the used paper pulp UPP collected into the used paper pulp collection tank 60 from the beating unit 21 (in the illustrated preferred embodiment, about 2000 g of used paper UP + 100 L of water W), the used paper pulp UPP of a specified portion (1 L in the illustrated preferred embodiment) is divided by the used paper pulp supply pump 86, and is transferred and contained in the concentration adjusting tank 85. As a result, its weight is sensed and measured by the weight sensor 87, and the result is sent to the apparatus control unit 5.

In succession, corresponding to the specified portion of the divided used paper pulp UPP, diluting water W is supplied by the water feed pump 47 into the concentration adjusting tank 85 from the white water collection tank 45 by a specified volume (9 L in the illustrated preferred embodiment, actually as weighed and measured by the weight sensor 87).

As a result, in the concentration adjusting tank 85, the used paper pulp UPP of beating concentration (2% in the illustrated preferred embodiment) and the water W are mixed and diluted, and a pulp suspension PS of a specified concentration (about 0.2% concentration or target concentration in the illustrated preferred embodiment) is mixed and prepared.

The target concentration of the pulp suspension PS to be prepared is determined in consideration of the paper making capacity in the paper making unit 4 described below on the basis of the results of the preliminary experiment, and it is set to about 0.2% in the illustrated preferred embodiment as mentioned above.

In this way, the pulp suspension PS prepared to the paper making concentration (0.2%) of the target concentration in the concentration adjusting tank 85 is transferred and supplied into a pulp supply tank 89 from the concentration adjusting tank 85 by a first suspension supply pump 88, and is stored in preparation for the next process of paper making unit 4. Thereafter, this paper making concentration adjustment process is repeated similarly for the entire volume of the used paper pulp UPP in the used paper pulp collection tank 60. The pulp supply tank 89 is provided with a second suspension supply pump 90 for sending the pulp suspension PS into a paper making process unit 95 of the paper making unit 4.

An agitating device 91 is provided in the pulp supply tank 89, and by the agitating action of this agitating device 91, the paper making concentration of the entire stored and held pulp suspension PS is uniformly kept at a specific value.

As described herein, the concentration adjustment by the paper making concentration adjusting unit 3 is not done in batch of whole volume, but is done in divided portions, that is, in small portions, and the water consumption is saved substantially, and the concentration adjusting tank 85 can be reduced in size and shape substantially, and hence the used paper recycling apparatus 1 is entirely built in a compact design.

The pulp concentration control unit 3C is to drive and control the beating concentration adjusting unit 3A and the paper making concentration adjusting unit 3B in interlock, and specifically by receiving the pulp concentration control information (the charging amount of the used paper UP, the water supply amount into the macerating tank 25, the beating concentration of the used paper pulp UPP, etc.) from the beating concentration control unit 75 of the beating concentration adjusting unit 3A, the paper making concentration information (the target paper making concentration of the used paper pulp UPP, the division extraction amount of the used paper pulp UPP from the used paper pulp collection tank 60, the water supply amount into the concentration adjusting tank 85, etc.) for adjusting the concentration of the used paper pulp UPP manufactured in the pulp making unit 2 to the target concentration (the paper making concentration) depending on this control information sent to the paper making concentration control unit 82 of the paper making concentration adjusting unit 3B, and thereby the paper making concentration adjusting process is executed.

The paper making unit (the paper making device) 4 is a process for manufacturing recycled paper RP from the used paper pulp UPP manufactured in the pulp making unit 2, and is mainly composed of a paper making process unit 95, a dewatering roll unit 96, and a drying process unit 97.

The paper making process unit 95 is a location for making wet paper RP₀ by making from slurry-like pulp suspension PS composed of the water W and the used paper pulp UPP sent from the pulp supply tank 89 of the pulp making unit 2, and mainly includes a paper making conveyor 100 and a pulp supply unit 101.

The paper making conveyor 100 is for conveying the pulp suspension while making paper therefrom, and a mesh belt 105 of paper making mesh structure composed of numerous mesh cells is disposed for filtering and dewatering the pulp suspension PS while running.

Specifically, the paper making conveyor 100 includes the mesh belt 105 of an endless belt form for conveying the pulp suspension PS while making paper therefrom, and a drive motor 106 for driving and moving this mesh belt 105.

The mesh belt 105 is specifically an endless belt formed of plate members of specified width having a paper making mesh structure composed of numerous mesh cells for filtering and dewatering the pulp suspension PS, connected in an annular form of a specified length.

The plate member of the paper making mesh structure for composing the mesh belt 105 is a material capable of filtering and dewatering the pulp suspension PS appropriately by way of the numerous mesh cells of the paper making mesh structure, and preferred materials include polypropylene (PP), polyethylene terephthalate (PET), polyamide (PA) (generally known as Nylon, a registered trademark), stainless steel (SUS), and other corrosion resistant materials, and in the illustrated preferred embodiment, a PET-made mesh belt 105 excellent in heat resistance is used.

The paper making mesh structure of the mesh belt is composed so as to obtain wet paper RP₀ of an appropriate weight in the process of the pulp suspension PS supplied on the mesh belt 105 being filtered and dewatered while the mesh belt 105 is running for a specified running distance, and preferably a smooth material of fine mesh cells and fine weaving cells is used. A specific paper making mesh structure of the mesh belt is selected depending on the desired characteristics of the obtained paper, and in particular the following points are taken into consideration.

### (1) Mesh size of mesh belt 105

The mesh size of the mesh belt 105 is preferably 25 mesh cells to 80 mesh cells, and in the illustrated preferred embodiment, the mesh belt 105 of 50 mesh cells is used.

### (2) Fiber diameter of mesh cells of mesh belt 105

The mesh structure of the mesh belt 105 is determined not only by the mesh size (mesh cells) but also by the mesh fiber diameter. At the same number of mesh cells, when the fiber diameter is larger, the mesh size is smaller, a when the diameter is smaller, the mesh size is larger, and this relation is expressed by the mesh voids or air permeability (cm³/cm²/sec), that is, the rate of permeating air.

### (3) Weaving structure

The weaving method of mesh cells of the mesh belt 105 includes single weaving, double weaving, varying method of warp diameter and weft diameter, and others, and in multiple weaving method, it is necessary to increase the diameter of the roll for rotating and supporting the mesh belt 105 as described below, and the apparatus is increased in size, therefore, in the illustrated preferred embodiment, the mesh belt 105 of single weaving is used.

In consideration of these conditions, the mesh belt 105 is formed in a mesh structure small in mesh fiber diameter, large in the number of mesh cells, and not lowered in the permeability, in order to prevent the used paper pulp UPP from slipping out of the mesh cells of the mesh belt 105 in the paper making process, and in the illustrated preferred embodiment, the mesh belt 105 is a 50-mesh PET-made mesh belt 105 of plain weaving. This mesh belt 105 has been experimentally proved to produce an excellent paper quality without causing any particular problem.

The width dimension of the mesh belt 105 set at a specified width dimension slightly larger than the width dimension of the reproduced paper RP to be manufactured from the pulp suspension PS.

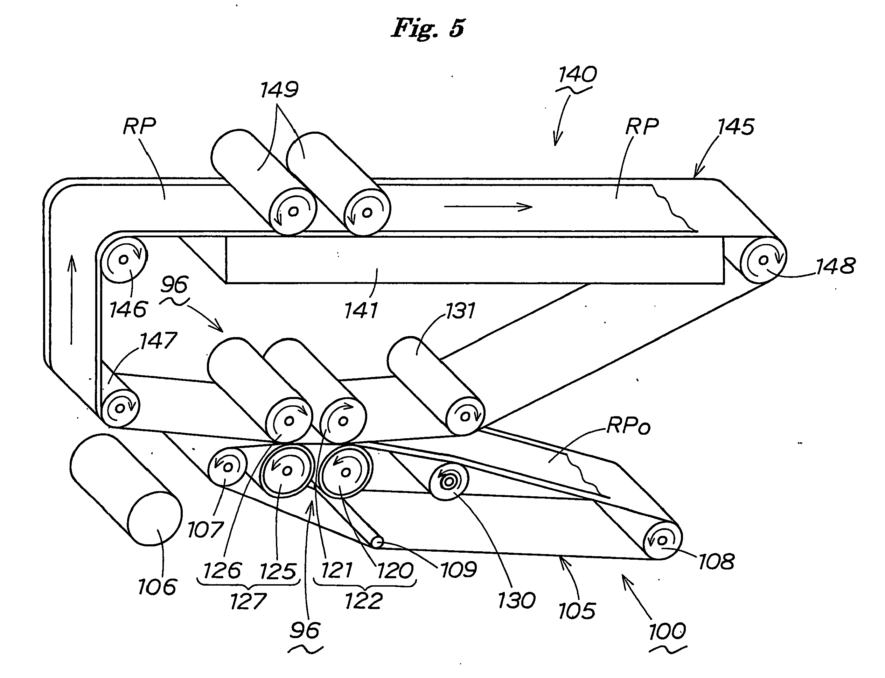

The mesh belt 105 is, as shown in Fig. 1 and Fig. 5, suspended and supported rotatably by way of a drive roller 107, a drive roller 108, a support roller 109, and a dewatering roll unit 96, and is driven and coupled to the drive motor 106 by way of the drive roller 107.

The paper making process length in the mesh belt 105 is determined in a range of straight running direction length of the mesh belt 105 in the apparatus case 6 of furniture size, specifically, in a range of upper side running direction length of the mesh belt 105 (in the illustrated preferred embodiment, the lateral direction length from the pulp supply unit 101 to the dewatering roll unit 96 in Fig. 1).

Specifically, the paper making process length of the mesh belt 105 is prescribed to be sufficient for manufacturing a proper weight of paper from the pulp suspension PS, in relation to the filtering and dewatering rate of the mesh structure, and the running speed of the mesh belt 105 described below, and also for accommodating the paper making conveyor 100 having the mesh belt 105 to be contained in the apparatus case 6 of furniture size.

Herein, the paper quality control condition of the mesh belt 105 including the paper making mesh structure of the mesh belt 105, that is, the condition for determining the paper quality of the recycled paper RP finally recycled in the paper making unit 4 is determined in a range of holding the pulp fibers in the pulp suspension PS to be supplied on the mesh belt 105 in a direction-free and disorderly array state.

Such characteristic configuration is obtained as a result of further various tests and studies by the present inventor after realization of the used paper recycling technology of large-scale plant such as conventional used paper recycling factory, as a used paper recycling technology of furniture size of the present invention.

The present inventor also noticed that the recycled paper RP recycled in the used paper recycling apparatus of furniture size of the present invention also has the paper quality tending to withstand relatively this repeated regeneration, and repeated various studies and experiments in order to find out the cause, and finally discovered that the recycled paper does not show evidently the typical aspect of ordinary paper known as "texture of paper".

That is, the ordinary paper sold on market has the "texture of paper" appearing in the running direction (longitudinal direction) of paper making, and it shows the direction of paper fibers, and when the longer side of a rectangular cut piece of paper is parallel to the "texture of paper", it is called "paper of longitudinal texture," and the paper at right angle to the "texture of paper" is called "paper of lateral texture", and the paper quality is anisotropic.

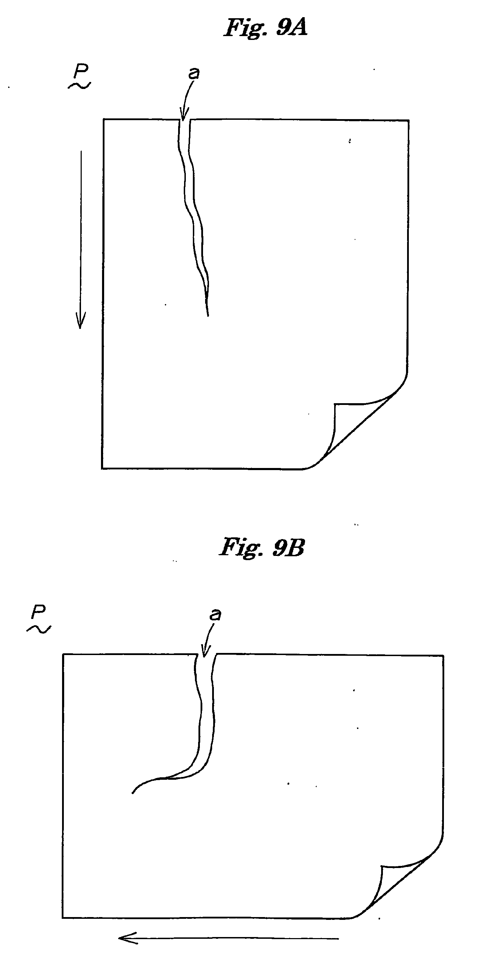

For example, in the case of "paper of longitudinal texture," as shown in Fig. 9, the paper P can be easily torn straightly in the longitudinal direction conforming to the fiber direction (= running direction of paper in paper making process, see arrow) (see fissure (a) in Fig. 9A), and is hardly torn straightly in direction at right angle to the fiber direction (see fissure (b) in Fig. 9B).

In this manner, by the manufacturing technology of manufacturing paper having an anisotropic paper quality, when attempted to regenerate from used paper UP, it has been experimentally known that the paper strength is gradually weakened in the process of repeating regenerating processes, first regeneration, second regeneration, third regeneration, and so forth, and finally the paper is not usable. The cause of such strength decline is considered as follows: as the used paper UP is macerated and beaten repeatedly and pulp is formed, the length of paper fibers (pulp filaments) becomes shorter gradually, and the recycled paper recycled from such short pulp filaments, and if the paper quality is anisotropic, the bonding force becomes very weak due to entangling of fibers. Incidentally, the recycled paper recycled in a large-scale factory such as used paper recycling plant can be recycled about two or three times.

By contrast, in the case of recycled paper RP recycled in the used paper recycling apparatus of furniture size of the present invention (see, for example, patent document 1, Japanese Patent Application Laid-Open No. 2008-174877), as compared with the recycled paper recycled in the large-scale plant facility, it has been experimentally known that the paper quality tens to withstand relatively repeated regenerations, and as a result of repeated various studies and experiments in order to find out the cause, it is finally discovered that the recycled paper does not show evidently the typical aspect of ordinary paper known as "texture of paper".

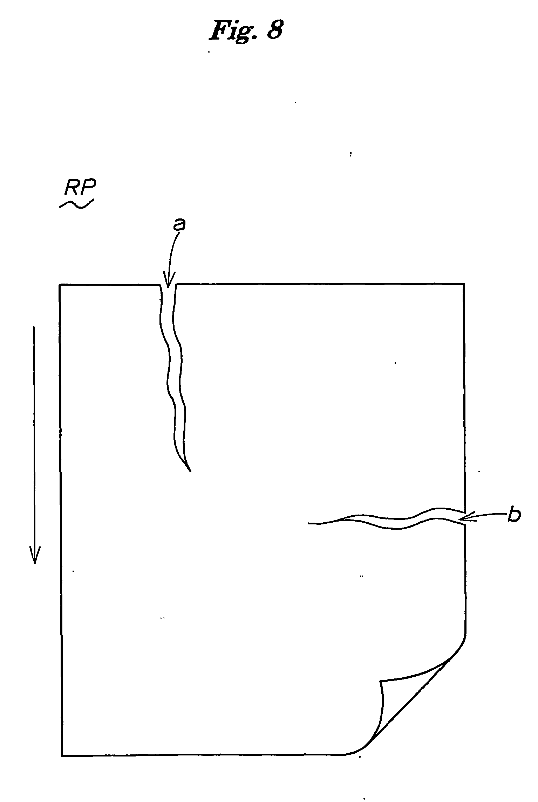

On the basis of such findings, by setting the paper quality control condition of the mesh belt 105 in a range of holding the pulp fibers in the pulp suspension PS to be supplied on the mesh belt 105 in a direction-free and disorderly array state, it is known that the recycled paper RP recycled from the pulp suspension PS does not show any typical aspect of ordinary paper known as "texture of paper", and shown in Fig. 8, when the recycled paper RP is torn parallel to the running direction (see arrow) (see fissure (a) in Fig. 8), or at right angle (see fissure (b) in Fig. 8), the paper is torn similarly and the paper quality is uniform in anisotropy not different in longitudinal or lateral direction, and the strength is experimentally proved to be sufficiently durable in practical use.

What is most important in the paper quality control condition of the mesh belt 105 lies in the running speed of the mesh belt 105 and the running inclination angle α of the mesh belt 105. In other words, the paper quality control condition of the mesh belt 105 includes at least the running speed of the mesh belt 105 and the running inclination angle α of the mesh belt 105, and also includes the condition of the mesh wire structure of the mesh belt 105 mentioned above.

The running speed of the mesh belt 105 is set in consideration of the conditions mentioned above, and is preferably set at 0.1 m/min to 1.8 m/min, or more preferably at 0.3 m/min to 1.0 m/min, and at 0.5 m/min in the illustrated preferred embodiment. By contrast, in large-scale plant such as conventional used paper recycling factory, the running speed of the mesh belt of this type is set at least at 100 m/min or more, or even more than 1000 m/min in a faster version.

The running speed of the mesh belt 105 is related not only to the array sate of pulp fibers in the pulp suspension PS, but also to the weight of the wet paper RP₀ in the paper making process, and the weight increases when the running speed of the mesh belt 105 is decreased, and the weight drops when the running speed picks up. In this case, the degree of beating of the used paper pulp UPP influences water filtering of the mesh belt 105, and when the beating degree and the pulp concentration are constant, a specific weight can be obtained.

Concerning the running inclination angle α of the mesh belt 105, the mesh belt 105 in the illustrated preferred embodiment is disposed so as to run obliquely and straightly toward its running direction, as shown in Fig. 1, Fig. 5, and Fig. 6, and in the limited space of installation, the paper making process length can be extended considerably, and the filtering and dewatering rate is enhanced in the relation with the paper making mesh structure of the mesh belt 105. The running inclination angle α of the mesh belt 105 is preferably set at 3 degrees to 12 degrees, or at 12 degrees in the illustrated preferred embodiment.

The drive motor 106 for moving and driving the mesh belt 105 is' specifically an electric motor, and is connected electrically to the apparatus control unit 5. This drive motor 106 is also used as the running and driving source of the dewatering roll unit 96 and the drying process unit 97 described below.

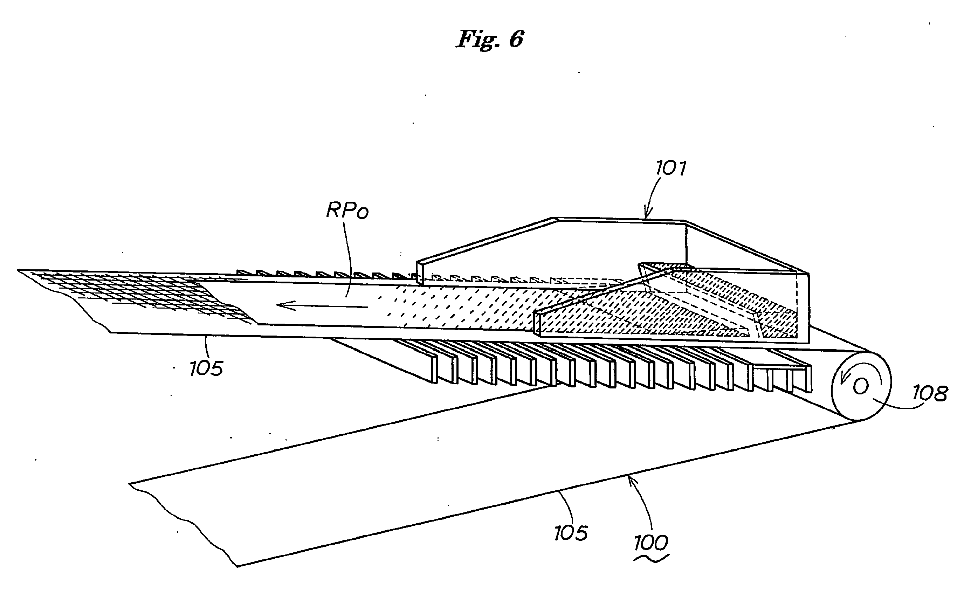

The pulp supply unit 101 is a location for supplying a pulp suspension PS onto the mesh belt 105 from the pulp making unit 2, and as shown in Fig. 6, it is provided at the start end position of the paper making process of the paper making conveyor 100, and the pulp suspension PS is diffused and supplied uniformly on the top surface of the mesh belt 105 by this pulp supply unit 101.

By the second suspension supply pump 90, the pulp suspension PS supplied into the pulp supply unit 101 from the pulp supply tank 89 is stored and reserved by a specified amount in this pulp supply unit 101, and by this reserving action, it is diffused uniformly on the top surface of the mesh belt 105. The pulp suspension PS diffused uniformly on the top surface of the mesh belt 105 is conveyed together with the mesh belt 105 by the driving action of the mesh belt 105 in the arrow direction, and is filtered by weight by the mesh cells of the mesh belt 105, and is dewatered, and wet paper RP₀ is obtained. In this case, the pulp fibers in the pulp suspension PS on the mesh belt 105 are filtered and dewatered directly in a non-directional and disorderly array state as mentioned above, and "texture of paper" does not appear at all on the recycled paper RP as described below.

The white water W filtered and dewatered by this mesh belt 105 (pulp water of ultra-low concentration filtered by the paper making mesh in the paper making process) is collected in the white water collection tank 45 of the water feed device 27 as mentioned above.

The dewatering roll unit 96 forms a location for squeezing and dewatering the wet paper RP₀ on the mesh belt 105 at the linkage position of the paper making process unit 95 and the drying process unit 97 described below.

Specifically, a smooth surface belt 145 mentioned below of the drying process unit 97 at the downstream side, and the mesh belt 105 of the paper making process unit 95 at the upstream side are disposed in upper and lower layers as shown in Fig. 1, and the upper and lower adjacent portions of the smooth surface belt 145 and the mesh belt 105 are formed at the linkage portion, and at this linkage portion, the dewatering roll unit 96 rolls and compresses the mesh belt 105 and the smooth surface belt 145 from upper and lower sides, thereby dewatering the wet paper.

The dewatering roll unit 96 includes at least a preliminary dewatering roll unit 96A, and a final dewatering roll unit 96B as principal components.

The dewatering roll unit 96 in the illustrated preferred embodiment includes, as specifically shown in Fig. 1, the preliminary dewatering roll unit 96A, the final dewatering roll unit 96B, and an angle defining roll unit 96C as assisting means, as principal components.

The preliminary dewatering roll unit 96A is for squeezing and dewatering preliminarily the wet paper RP₀ on the mesh belt 105, and specifically includes a preliminary squeezing roll pair 122 consisting of a preliminary dewatering roll 120 rolling on the mesh belt 105 from the lower side, and a preliminary press roll 121 rolling and pressurizing on the smooth surface belt 145 from the upper side in collaboration with the preliminary dewatering roll 120.

By the preliminary squeezing roll pair 122 consisting of the preliminary dewatering roll 120 and the preliminary press roll 121, the mesh belt 105 and the smooth surface belt 145 are rolled and squeezed from both upper and lower sides at a specified preliminary pressure in a compressed state, and the water content in the wet paper RP₀ on the mesh belt 105 is removed preliminarily.

In this case, the preliminary pressure, that is, the preliminary squeezing force of the preliminary dewatering roll 96A for preliminarily squeezing and dewatering the wet paper RP₀ on the mesh belt 105 is set at a magnitude so as not to destroy the wet paper RP₀ of high water content, and in the illustrated preferred embodiment, the preliminary squeezing force is determined so that the water content of the wet paper RP₀ on the mesh belt 105 after preliminary dewatering process may be in a range of 80 to 75%.

The final dewatering roll unit 96B is for obtaining a dry paper specified water content (recycled paper) RP by further squeezing and dewatering the wet paper RP₀ on the mesh belt 105 after preliminary dewatering by the preliminary dewatering roll unit 96A, and specifically includes at least one set of a final squeezing roll pair 127 consisting of a final dewatering roll 125 rolling on the mesh belt 105 from the lower side, and a final press roll 126 rolling and pressing on the smooth surface belt 145 from the upper side in cooperation with the final dewatering roll 125.

By the final squeezing roll pair 127 consisting of the final dewatering roll 125 and the final press roll 126, the mesh belt 105 and the smooth surface belt 145 are rolled and squeezed from both upper and lower sides at a specified final pressure in a compressed state, and the water content in the wet paper RP₀ on the mesh belt 105 is finally removed, and a dry paper of specified water content, that is, recycled paper RP is obtained.

In this case, the final pressure, that is, the final squeezing force of the final dewatering roll 96B for finally squeezing and dewatering the wet paper RP₀ on the mesh belt 105 is set to such a magnitude for obtaining a specified dewatering effect securely about the preliminarily dewatered wet paper RP₀, and in the illustrated preferred embodiment, it is set so that the water content of the dry paper (recycled paper) RP on the mesh belt 105 after the final dewatering process may be in a range of 70 to 65%.

These rolls 120, 121, 125, 126 in the dewatering roll unit 96 are not specifically shown, but as being driven and coupled to the single drive motor 106 by driving and coupling means of gear mechanism, all rolls 120, 121,125,126 are rotated and driven in mutual interaction.

In this case, these rolls 120, 121,125,126 are rotated and controlled so as to roll and contact mutually at a slight rotating speed difference mutually on the outer circumferential surfaces of the upper and lower rolls 120, 125 and the outer circumferential surfaces of 121, 126, on the contact surfaces (the lower side of the mesh belt 105 and the upper side of the smooth surface belt 145) of the mesh belt 105 and the smooth surface belt 145 rolled and squeezed in a compressed state between the outer circumferential surfaces.

Specifically, the rotating speed of the upper side preliminary and final press rolls 121, 126 is set slightly larger than the rotating speed of the lower side preliminary and final dewatering rolls 120, 125, and therefore the running speed of the smooth surface belt 145 is set slightly larger than the running speed of the mesh belt 105. In such configuration, as described below, when the wet paper RP₀ squeezed and dewatered by the dewatering roll unit 96 is transferred and conveyed to the lower side of the upper side smooth surface belt 145 from the upper side of the lower side mesh belt 105, a tension is applied to the wet paper RP₀, and wrinkling of the wet paper RP₀ is effectively prevented.

The angle defining roll unit (angle defining means) 96C is for assisting the squeezing and dewatering action of the preliminary dewatering roll unit 96A and the final dewatering roll unit 96B to be effective, and it is provided at the upstream side of the preliminary dewatering roll unit 96A, and defines the inclination angle between the mesh belt 105 and the smooth surface belt 145 inserted in the preliminary dewatering roll unit 96A.

The angle defining roll unit 96C is specifically for defining the inclination angle between the mesh belt 105 and the smooth surface belt 145 inserted in the preliminary dewatering roll unit 96A, and more specifically it includes a mesh belt guide roll 130 rolling on the mesh belt 105 from the lower side, and defining the insertion angle of the mesh belt 105 in the preliminary dewatering roll unit 96A, and a smooth surface belt guide roll 131 rolling on the smooth surface belt 145 from the upper side, and defining the insertion angle of the smooth surface belt 145 in the preliminary dewatering roll unit 96A.

By the mesh belt guide roll 130, the insertion angle of the mesh belt 105 in the preliminary dewatering roll unit 96A is defined, and by the smooth surface belt guide roll 131, the insertion angle of the smooth surface belt 145 in the preliminary dewatering roll unit 96A is defined, and therefore the inclination angle between the mesh belt 105 and the smooth surface belt 145 is indirectly determined in a specified range.

The inclination angle of the mesh belt 105 and the smooth surface belt 145 is determined so as to prevent effectively the wet paper RP₀ from returning to slurry by re-absorption of a large volume of squeezed water into the wet paper RP₀ after the water contained in the wet paper RP₀ is once squeezed substantially to the upstream side of the preliminary dewatering roll unit 96A by the preliminary dewatering action by the preliminary dewatering roll unit 96A.

That is, by the preliminary dewatering roll 120 and the preliminary press roll 121 of the preliminary dewatering roll 96A, when the mesh belt 105 and the smooth surface belt 145 on which the wet paper RP₀ is mounted at the upper side are squeezed and rolled from the upper and lower sides in a compressed state, the water content in the wet paper RP₀ is squeezed out to the upstream side of the both rolls 120, 121.

In this case, if the inclination angle α between the mesh belt 105 and the smooth surface belt 145 is too large, at a position near the upstream side of the both rolls 120, 121, the upper side smooth surface belt 145 is apart from the wet paper RP₀ on the lower side mesh belt 105, and hence a part of the abundant squeezed water contained in the wet paper RP₀ may be absorbed again in the wet paper RP₀, and the wet paper RP₀ may become slurry again.

By contrast, when the inclination angle α between the mesh belt 105 and the smooth surface belt 145 is small, at a position near the upstream side of the both rolls 120, 121, the upper side smooth surface belt 145 is pressed to the wet paper RP₀ on the lower side mesh belt 105, and hence all of the water squeezed from the wet paper RP₀ drops to the lower side by way of the mesh belt 105, and is not absorbed again in the wet paper RP₀, and the wet paper RP₀ may be prevented from becoming slurry again.

The inclination angle α between the mesh belt 105 and the smooth surface belt 145 is preferably set in a range of 1 to 20 degrees as a result of various tests, preferably 3 to 7 degrees, and it is set at 5 degrees in the illustrated preferred embodiment.

Thus, by driving of the drive motor 106, the rolls 120, 121, 125, 126 of the preliminary dewatering roll unit 96A and the final dewatering roll unit 96B in the dewatering roll unit 96 are put in rotation, and first by the preliminary squeezing roll pair 122 in the preliminary dewatering roll unit 96A, the mesh belt 105 and the smooth surface belt 145 are rolled and squeezed from both upper and lower sides in a compressed state at a specified preliminary pressure, and the water contained in the wet paper RP₀ on the mesh belt 105 is preliminarily removed (in the illustrated preferred embodiment, the water content in the wet paper RP₀ is reduced from 90 to 85% to 80 to 75%).

In succession, by the final squeezing roll pair 127 in the final dewatering roll unit 96B, the mesh belt 105 and the smooth surface belt 145 are rolled and squeezed from both upper and lower sides in a compressed state at a specified final pressure, and the water contained in the wet paper RP₀ on the mesh belt 105 is finally removed, and the dry paper of specified water content, that is, the recycled paper RP is obtained (in the illustrated preferred embodiment, the wet paper RP₀ of water content of 80 to 75% is dewatered to the dry paper RP of water content of 70 to 65%). In this series of process, the white water W squeezed and dewatered from the wet paper RP₀ is collected in the white water collection tank 45 in the water feed device 27.

The wet paper RP₀ squeezed and dewatered by the dewatering roll unit 96 is transferred and conveyed to the lower side of the upper side smooth surface belt 145 from the upper side of the lower side mesh belt 105, at a downstream side location of the dewatering roll unit 96, and is conveyed together with the smooth surface belt 145, and is dried by the drying process unit 97 in the drying process.

This transfer action is considered to be caused by a smooth surface structure of the smooth surface belt 145. That is, the surface of the lower side mesh belt 105 is a fine rough surface having multiple fine continuous pores, whereas the surface of the upper side smooth surface belt 145 is a smooth surface without pores, and hence the wet paper RP₀ slightly containing water seems to be adsorbed by the surface tension against the surface of the smooth surface belt 145.

The drying process unit 97 is a location for producing generated paper RP by further drying the wet paper RP₀ once squeezed and dewatered in the dewatering roll unit 96 after the paper making process in the paper making process unit 95, and mainly includes a drying conveyor 140 and a heating and drying unit 141.

The drying conveyor 140 is for smoothing and conveying the wet paper RP₀ squeezed and dewatered in the dewatering roll unit 96, and mainly includes the smooth surface belt 145, and the drive moor 106 for driving and moving this smooth surface belt 145.

The smooth surface belt 145 is to convey the wet paper RP₀ while heating and drying, and is specifically an endless belt connected and formed in an annular shape of a specified length of a plate material of smooth surface structure having a specified width. The plate material of smooth surface structure is finished in an appropriate smooth surface at one side of the surface of the wet paper RP₀, and is made of a material capable of withstanding the heating action of the heating and drying unit 141 described below, and preferably an elastic heat resistant material is used such as fluorine resin or stainless steel, and a fluorine resin belt is used in the illustrated preferred embodiment.

This smooth surface belt 145 is, as shown in Fig. 1, rotatably supported and held by way of a drive roller 146, driven rollers 147, 148, and the dewatering roll unit 96, and is driven and coupled to the drive motor 106 by way of the drive roller 146.

The drive motor 106 for driving and moving the smooth surface belt 145 is commonly used as the running and driving source of the paper making conveyor 100 and the dewatering roll unit 96 as described above.

The heating and drying unit 141 is a location for heating and drying the wet paper RP₀ on the smooth surface belt 145, and includes a heater plate 150, as a heating unit, disposed in the midst of the running route of the smooth surface belt 145.

This heater plate 150 is specifically configured to heat and dry the wet paper RP₀ on the smooth surface belt 145 indirectly by way of the smooth surface belt 145.

In the midst of the running route of the smooth surface belt 145, two smooth surface finishing rolls 149, 149 are disposed, and are configured so as to roll and pressurize the wet paper RP₀ on the smooth surface belt 145 sequentially, and thereby the surface of one side and the surface of opposite side of the wet paper RP₀ contacting with the surface of the smooth surface belt 145 may be finished to a proper smooth surface.

At the downstream side of the heating and drying unit 141 in the smooth surface belt 145, a peeling member 151 is provided, and the dry paper dried and conveyed on the smooth surface belt 145, that is, the recycled paper RP is sequentially peeled from the holding side of the smooth surface belt 145.

In this relation, at the terminal end position of the running route of the smooth surface belt 145 at the downstream side of this peeling member 151, a fixed size cutter unit 152 is provided, and the recycled paper RP peeled off from the smooth surface belt 145 is cut to a specified size (an A4 format in the illustrated preferred embodiment), and is discharged from the discharge port 8 of the apparatus case 6.

The apparatus control unit 5 is to control the operations of the drive units of the pulp making unit 2, the pulp concentration adjusting unit 3, and the paper making unit 4 automatically by interacting with each other, and is specifically composed of a microcomputer having a CPU, a ROM, a RAM, and an I/O port.

This apparatus control unit 5 incorporates programs for executing the pulp making process of the pulp making unit 2, the concentration adjusting process of the concentration adjusting unit 3, and the paper making process of the paper making unit 4, by interacting with each other, and also stores various items of information necessary for driving of the components 2 (20, 21), 3 (3A, 3B), and 4 (95, 10, 96), for example, the driving time and rotating speed of the agitating device 26 in the macerating unit 20, the water feed timing and water feed amount of the water feed device 27, the driving time and circulation amount of the circulation pump 69 in the beating unit 21, the driving time and rotating speed of the grinder 50, the adjusting timing and beating gap G adjusting amount of the gap adjusting means 57, the running speed of the conveyors 100, 140 in the paper making unit 4, the driving time of the heating and drying unit 141, and the operation timing of the fixed size cutter unit 152, preliminarily as data, or from the keyboard as appropriate selective input data.

In the apparatus control unit 5, as mentioned above, the weight sensors 48, 87, the position detection sensor, and the drive units 35, 56, 61, 66, 106 are connected electrically, and the apparatus control unit 5 controls these drive units 35, 56, 61, 66, 106 according to the measured values and the control data.

The used paper recycling apparatus 1 having such configuration is started when the power source is turned on, and the components 2 (20, 21), 3 (3A, 3B), and 4 (95, 10, 96) are controlled automatically by the apparatus control unit 5 in mutual interaction, and the used paper UP, UP, ... charged in the inlet 7 of the apparatus case 6 are macerated and beaten by the macerating unit 20 and the beating unit 21 in the pulp making unit 2, and the used paper pulp UPP is manufactured, and further a pulp suspension PS of a paper making concentration is manufactured in the pulp concentration adjusting unit 3, and this pulp suspension PS is manufactured in the paper making process unit 95 of the paper making unit 4, the dewatering roll unit 96, and the drying process unit 97, and recycled paper RP is obtained, which is discharged into the recycled paper receiving tray 9 from the discharge port 8b of the apparatus case 6.

In this case, the paper quality control condition of the mesh belt 105 is determined so that the pulp fibers in the pulp suspension PS supplied on the mesh belt 105 may be maintained in a non-directional and disorderly array state, and therefore the obtained recycled paper RP is free from "texture of paper", and the paper quality is uniform without difference in longitudinal and lateral direction, and the strength is sufficient, and along with the purpose of prevention of leak or disclosure of confidential information, personal information, and various forms of information, the used paper UP used repeatedly by regeneration processes is not lowered in the strength, and the recycled paper RP withstanding use for a long period may be presented.

Accordingly, the present invention realizes and presents a used paper recycling apparatus of furniture size that can be installed not only in a large office, but also in a small shop or a general household, being friendly to the environment, low in running cost, capable of preventing leak or disclosure of confidential information, personal information, and various types of information, and capable of maintaining a high confidentiality.

In the mentioned above preferred embodiment, for example, the design may be changed or modified as follows.

For example, the specific numerical values of the paper quality control condition of the mesh belt 105 are obtained from a comprehensive combination condition of the running speed of the mesh belt 105 in the configuration of the illustrated preferred embodiment, the running inclination angle α of the mesh belt 105, and the paper making mesh structure of the mesh belt, and they are not particularly limited as far as the pulp fibers in the pulp suspension PS supplied on the mesh belt 105 may be maintained in a range of a non-directional and disorderly array state.

As the invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A paper making device of a used paper recycling apparatus for manufacturing recycled paper from used paper pulp manufactured in a pulp making unit of a preceding process, in the used paper recycling apparatus of furniture size to be installed at the site of origin of the used paper, comprising:
a paper making process unit for making wet paper by making from the slurry-type pulp suspension mixed of used paper pulp and water sent from the pulp making unit,
wherein this paper making process unit has a paper making conveyor for manufacturing and conveying the pulp suspension, and this paper making conveyor is disposed and configured to drive a mesh belt of paper making mesh structure composed of numerous mesh cells while filtering and dewatering the pulp suspension, and
the paper quality control condition of the mesh belt is set in a range of maintaining the pulp fibers in the pulp suspension supplied on the mesh belt in a non-directional and disorderly array state.

2. The paper making device of the used paper recycling apparatus of claim 1,
wherein the paper quality control condition of the mesh belt at least includes the running speed of the mesh belt and the running inclination angle of the mesh belt.

3. The paper making device of the used paper recycling apparatus of claim 1,
wherein the running speed of the mesh belt is set at 0.1 m/min to 1.8 m/min.

4. The paper making device of the used paper recycling apparatus of claim 1,
wherein the mesh belt is disposed and configured so as to run obliquely upward and straightly toward its running direction.

5. The paper making device of the used paper recycling apparatus of claim 4,
wherein the running inclination angle of the mesh belt is set at 3 degrees to 12 degrees.

6. The paper making device of the used paper recycling apparatus of claim 1,
wherein the paper making process unit is provided at a starting end position of the paper making process of the paper making conveyor, and includes a pulp supply unit for supplying the pulp suspension sent from the pulp making device into the paper making conveyor, and
by this pulp supply unit, the pulp suspension is spread uniformly and supplied on the upper side of the mesh belt of the paper making conveyor.

7. The paper making device of the used paper recycling apparatus of claim 1,
wherein the paper making mesh structure of the mesh belt is composed so that the pulp suspension supplied on the mesh belt may be filtered and dewatered to be wet paper of an appropriate weight in the process of the mesh belt running for a specified running distance.

8. The paper making device of the used paper recycling apparatus of claim 1,
wherein the mesh size of the mesh belt is 25 mesh cells to 80 mesh cells.

9. The paper making device of the used paper recycling apparatus of claim 1,
wherein the paper making process length of the mesh belt is set in a range of a straight running direction length of the mesh belt in the apparatus case of furniture size.

10. The paper making device of the used paper recycling apparatus of claim 1,
wherein the paper making process length of the mesh belt is set in relation to the running speed of the mesh belt and the paper making mesh structure, so that the pulp suspension may be manufactured into an appropriate weight, and that the paper making conveyor having the mesh belt may be contained within the apparatus case of furniture size.

11. The paper making device of the used paper recycling apparatus of any one of claims 1 to 10, further comprising:
the paper making process unit for obtaining wet paper by manufacturing from slurry-like pulp suspension composed of water and used paper pulp sent from the pulp making device,
a drying process unit for obtaining recycled paper by drying the wet paper manufactured and formed in the paper making process unit, and
a dewatering roll unit for squeezing and dewatering the wet paper at a linkage part of the paper making process unit and the drying process unit,
wherein the pulp suspension supplied from the pulp making device is manufactured, dewatered, and dried.

12. The paper making device of the used paper recycling apparatus of claim 1,
wherein the paper making conveyor unit includes the mesh belt as an endless belt for manufacturing and conveying the pulp suspension, and a drive motor for driving and moving the mesh belt.

13. A used paper recycling apparatus comprising, in an apparatus case of furniture size to be installed at the site of origin of used paper, a pulp making unit for manufacturing used paper pulp by macerating and beating used paper, a paper making process unit for manufacturing recycled paper by making from the used paper pulp manufactured in the pulp making unit, and a control unit for driving and controlling the pulp making unit and the paper making unit in cooperation,
wherein the paper making process unit includes a paper making process unit for making wet paper by making from the slurry-type pulp suspension mixed of used paper pulp and water sent from the pulp making unit,
the paper making process unit has a paper making conveyor for manufacturing and conveying the pulp suspension, and
the paper making conveyor is disposed and configured to drive a mesh belt of paper making mesh structure composed of numerous mesh cells while filtering and dewatering the pulp suspension, and
the paper quality control condition of the mesh belt is set in a range of maintaining the pulp fibers in the pulp suspension supplied on the mesh belt in a non-directional and disorderly array state.
